**Europäisches Patentamt**

**European Patent Office**

**Office européen des brevets**

(19)

(11) Numéro de publication : **0 275 229 B1**

## (12) FASCICULE DE BREVET EUROPEEN

(45) Date de publication du fascicule du brevet :
**22.01.92 Bulletin 92/04**

(51) Int. Cl.⁵ : **G01B 11/02,** G01D 5/39

(21) Numéro de dépôt : **88440001.1**

(22) Date de dépôt : **07.01.88**

(54) **Procédé et dispositif pour détecter et mesurer automatiquement la position de formes ou de nuances d'une image fournie par une caméra vidéo.**

(30) Priorité : **09.01.87 FR 8700241**

(43) Date de publication de la demande :
**20.07.88 Bulletin 88/29**

(45) Mention de la délivrance du brevet :
**22.01.92 Bulletin 92/04**

(84) Etats contractants désignés :
**DE GB IT**

(56) Documents cités :
**DE-B- 2 633 166**
**FR-A- 2 343 994**
**GB-A- 1 018 191**

(56) Documents cités :
**US-A- 4 338 626**
**PATENT ABSTRACTS OF JAPAN, vol. 10, no. 300 (P-506)[2356], 14th October 1986; & JP-A-61 116 606 (HITACHI LTD) 04-06-1986**
**SOLID STATE TECHNOLOGY, vol. 26, no. 8, Août 1983, pages 79-80, Port Washington, New York, US: "Video linewidth, measurement system"**

(73) Titulaire : **Cattarino, Yvan**
**146, Tour de L'Europe**
**F-68100 Mulhouse (FR)**

(72) Inventeur : **Cattarino, Yvan**
**146, Tour de L'Europe**
**F-68100 Mulhouse (FR)**

## Description

La présente invention concerne un procédé et un dispositif permettant de détecter et de mesurer automatiquement la position de formes ou du nuances, immobiles ou en mouvement, d'une image fournie par une caméra vidéo et apparaissant sur un moniteur vidéo.

Les dispositifs couramment employés dans l'industrie pour obtenir des mesures permanentes de position par détection optique sont essentiellement du type à barrettes d'éléments photosensibles ou du type à caméra linéaire. Le domaine d'application de ces dispositifs se limite toutefois aux cas où les conditions optiques générales ainsi que la variation optique à détecter sont relativement stables. Dans les autres cas, la mesure fournie par ces dispositifs n'est pas exploitable (pour une régulation, par exemple) car sa validité n'apparait pas de manière manifeste et ne peut être confirmée que par des vérifications d'étalonnage de la détection plus ou moins fréquentes et laborieuses, selon le cas de figure.

Le but de l'invention est de fournir un procédé qui permet d'effectuer automatiquement et en continu une mesure optique de position avec, d'une part, une sécurité d'emploi manifeste du point de vue de la validité de la mesure et, d'autre part, une simplification extrême de l'étalonnage de la détection. Par ces deux avantages, un dispositif réalisé selon l'invention trouve des applications dans divers cas de mesure de position en général et, en particulier, dans les cas où les dispositifs de détection optique existants ne sont pas pleinement exploitables.

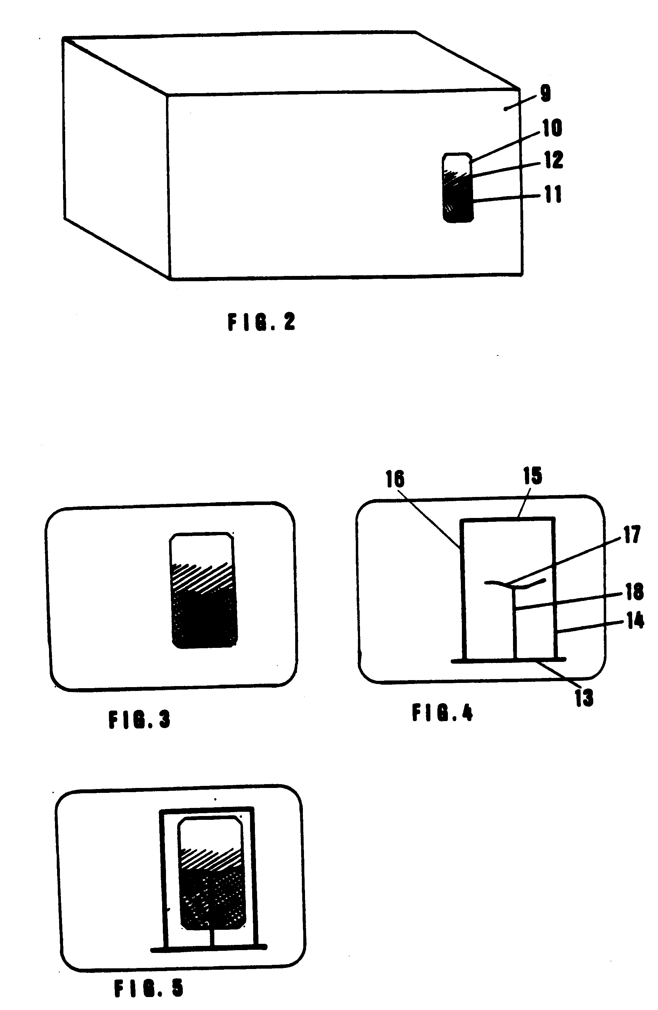

Selon l'invention, on propose donc un procédé permettant de détecter et de mesurer automatiquement la position de formes quelconques apparaissant sur une image fournie par une caméra vidéo, ainsi qu'un dispositif destiné à cet effet. Le procédé emploie : une caméra qui fournit un signal vidéo correspondant à l'image visée, un ensemble électronique comportant des fonctions d'analyse (pour la détection de position) et de traitement du signal vidéo, un moniteur vidéo qui visualise l'image composite (image fournie par la caméra, modifiée par le traitement du signal), une console d'entrée permettant d'agir sur les paramètres de l'analyse et du traitement du signal, et une console de sortie qui délivre le signal de mesure. Le procédé permet de visualiser sur le moniteur vidéo, conjointement et en permanence : l'image du champ de mesure, la position de référence de la mesure, la position détectée, la localisation de la mesure et la plage de mesure. Pour saisir d'emblée cet aspect pratique du procédé, on peut se reporter aux figures 3, 4 et 5, la figure 3 montrant un exemple d'image fournie par la caméra, la figure 4 montrant ce qui est rajouté à l'image par le traitement du signal, notamment la trace 17 qui correspond à la position détectée, et la figure 5 montrant l'image résultante apparaissant sur le moniteur vidéo.

Par la visualisation conjointe des éléments cités, le procédé permet une vérification visuelle permanente et sans ambiguité de la validité de la mesure effectuée. En outre, la visualisation, par la trace de détection, de la position mesurée, facilite le réglage ou l'étalonnage du seuil de détection.

Les figures 1.A, 1.B et 1.C illustrent schématiquement le procédé.

Les figures 2, 3, 4 et 5 illustrent l'application d'un dispositif réalisé selon le procédé, dans le cas de la mesure du niveau d'un liquide superposé d'une couche de mousse et apparaissant au travers d'un hublot du réservoir.

Les figures 6, 7, 8, 9 et 10 illustrent, pour la même application, diverses possibilités de mesure et de présentation de l'image apparaissant sur le moniteur vidéo.

Les figures 11, 12 et 13 illustrent un autre exemple de mesure de niveau réalisable par le dispositif.

Les figures 14, 15, 16, 17 et 18 illustrent les possibilités de mesure de position dans le cas d'un convoyeur à bande transporteuse.

Les figures 19 et 20 illustrent l'utilisation du procédé pour positionner un objet par rapport à une référence verticale.

Les figures 21, 22 et 23 illustrent l'application du procédé à la mesure de position et à la visualisation de la "ligne d'eau" d'une machine à papier.

Des explications plus détaillées concernant ces figures sont données plus loin, dans la description des exemples d'application.

On décrira maintenant l'invention plus en détail.

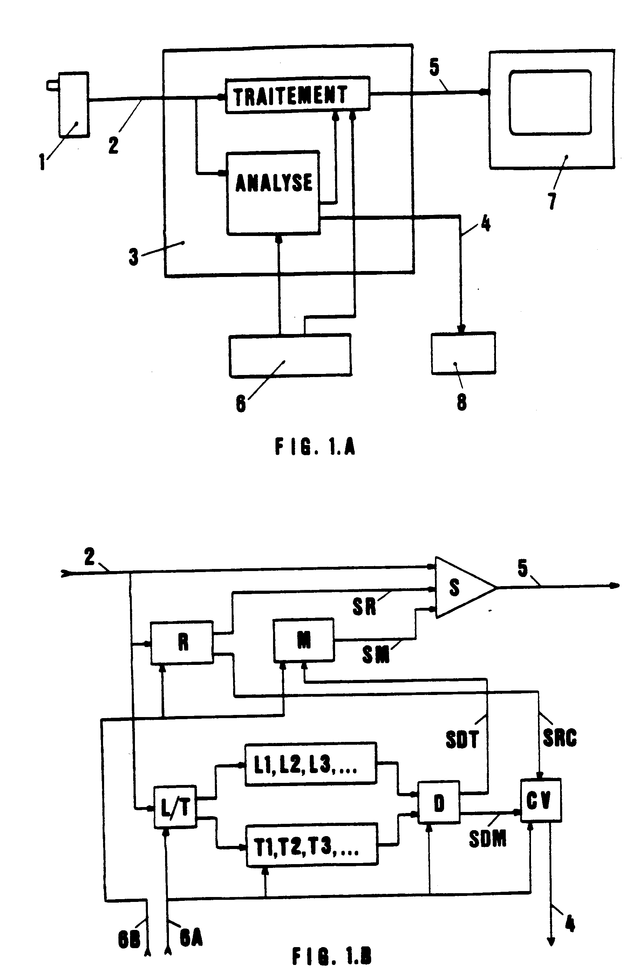

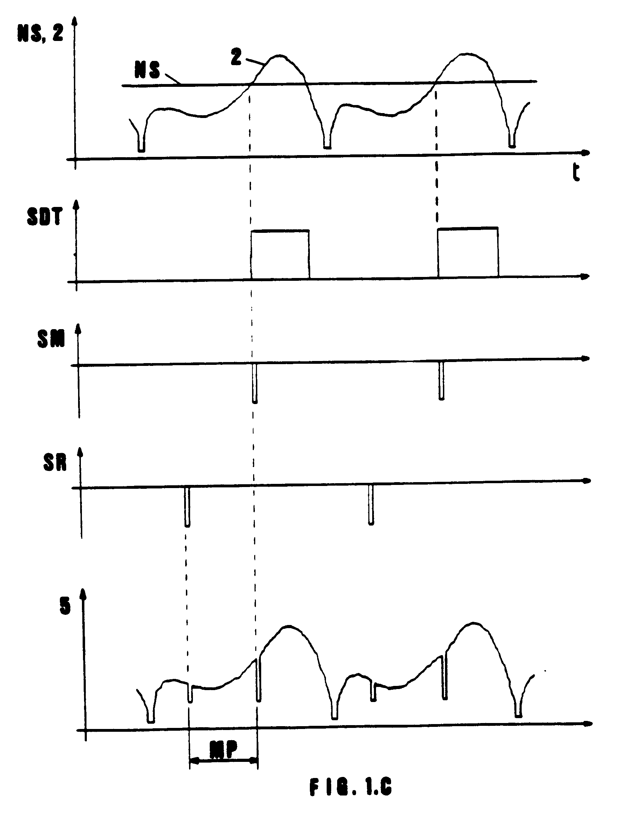

La figure 1.A représente le schéma de principe du procédé. Il comporte :

– une caméra vidéo (1) noir et blanc ou couleur qui fournit le signal vidéo (2) correspondant à l'image visée ;

– un ensemble électronique (3) ayant pour fonction, d'une part, d'analyser le signal vidéo pour effectuer la détection de position et délivrer un signal (4) représentatif de la position, d'autre part, de fournir un signal vidéo composite (5) constitué par l'image visée à laquelle se rajoutent les incrustations spécifiques constituant le traitement de l'image ;

– une console d'entrée (6) au moyen de laquelle un opérateur a, d'une part, la possibilité d'effectuer des choix de paramètres et de fonctions définissant l'analyse et le traitement de l'image, d'autre part, la possibilité de choisir le réglage du seuil de détection ;

– un moniteur vidéo (7) noir et blanc ou couleur qui visualise l'image correspondant au signal composite (5) ;

– une console de sortie (8) qui fournit, d'une part, un signal analogique et un signal logique calibrés correspondant à la mesure de position et, d'autre part, des signaux d'alarme concernant la mesure : dépassement de seuils minimum et maximum, validité de la mesure ; la console de sortie comporte aussi un affichage numérique de la mesure.

Selon le choix du degré de complexité, un dispositif réalisé selon ce prodédé peut :

– mesurer et visualiser plusieurs positions différentes, conjointement ;

– comporter l'inscription de la valeur numérique de la mesure sur l'image du moniteur vidéo ;

– utiliser deux ou plusieurs caméras et en combiner les signaux ;

– utiliser une caméra noir et blanc avec un moniteur couleur ou vice versa.

La figure 1.B est une représentation schématique où figurent les fonctions essentielles que comporte l'ensemble d'analyse et de traitement de l'image, ainsi que leur interconnexion. Les éléments (R), (M) et (S) constituent le traitement du signal. L'élément (S) fournit un signal vidéo composite (5) constitué par le signal (2) délivré par la caméra, le signal (SR) et le signal (SM). Le signal (SR) est fourni par l'élément (R) qui élabore la visualisation du cadre de référence. Le signal (SM) est fourni par l'élément (M) qui élabore la visualisation de la trace de détection et de la trace de mesure. Dans l'exemple représenté par les figures 3, 4 et 5, le signal (2) correspond à la figure 3, le signal (SR) correspond aux segments (13), (14), (15) et (16) de la figure 4, le signal (SM) correspond à la trace de détection (17) et à la trace de mesure (18), le signal vidéo composite (5) correspondant à la figure 5. Par la liaison (6B), la console d'entrée permet de positionner à volonté les segments représentés sur la figure 4, à l'exclusion de la trace de détection (17).

L'analyse du signal vidéo (2) fourni par la caméra est effectuée selon la sélection de la fonction d'analyse. Cette fonction peut être du type (L), c'est-à-dire une détection sur le signal vidéo d'une ou plusieurs lignes de l'image (détection horizontale) ou du type (T), c'est-à-dire une détection sur le signal vidéo constituant une trame de l'image (détection verticale). La sélection est effectuée à partir de la console d'entrée, par la liaison (6A). On peut ainsi choisir le type de détection par l'action sur l'élément commutateur (L/T) et choisir une parmi les fonctions de détection disponibles L1,L2,L3 ou T1,T2,T3 etc. ces dernières se distinguant par leur genre de détection : par comparaison du signal vidéo direct avec un seuil établi, par comparaison du signal dérivé (détection de contrastes), par comparaison du signal intégré ou ayant subi divers filtrages, par comparaison du signal représenté statistiquement, etc.

La liaison (6A) permet aussi de faire varier à partir de la console d'entrée l'amplitude du seuil de détection.

L'élément (D) de l'ensemble d'analyse fournit, d'une part, un signal de détection (SDT) destiné à l'élaboration du traitement du signal pour la visualisation de la trace de détection et de la trace de mesure, d'autre part, un signal (SDM) destiné à l'élaboration du signal de mesure. L'élément de conversion (CV) élabore, à partir des signaux de référence (SRC) et de détection (SDM), un signal de mesure de position (4) de type analogique ou digital.

Prises séparément, les fonctions mentionnées ci-dessus, c'est-à-dire l'analyse du signal vidéo pour détecter une position sur l'image ainsi que le traitement d'images consistant à ajouter des incrustations à l'image relèvent des techniques habituelles connues. Ces techniques peuvent être de type analogique ou de type numérique (avec digitalisation de l'image et traitement informatique). Elles ne sont donc pas décrites ici.

La figure 1.C représente, à titre d'exemple, quelques diagrammes corrélatifs des signaux élaborés par les éléments de la figure 1.B, dans un cas de réalisation très simplifié : analyse du signal de ligne (détection horizontale), analyse et traitement du signal analogique, détection par comparaison du signal direct avec un seuil déterminé.

On distingue : le signal vidéo (2) fourni par la caméra (représentation du signal correspondant à deux lignes successives), le niveau du seuil de détection (NS), le signal (SDT) fourni par la détection, le signal (SM) élaboré par l'élément (M) du traitement d'image, le signal (SR) élaboré par l'élément (R) du traitement d'image (position de référence) et le signal (5) qui est le signal vidéo composite qui constitue l'image apparaissant sur le moniteur. Dans cet exemple, les traces de détection (SM) et de référence (SR) apparaîtront en noir sur l'écran avec un moniteur noir et blanc. L'intervalle (MP) représente la mesure de position. Par conversion de cet intervalle de temps en tension ou en fréquence, l'élément (CV) fournit un signal de sortie (4) analogique ou digital.

On va maintenant décrire, à titre d'exemples, cinq applications différentes d'un dispositif réalisé selon le procédé de l'invention. La description du premier exemple est très détaillée afin d'illustrer les aspects pratiques du dispositif.

1. Mesure continue du niveau d'un liquide contenu dans un réservoir. Le liquide est superposé d'une couche de mousse. Le niveau du liquide et l'épaisseur de la couche de mousse apparaissent au travers de la vitre d'un hublot. La figure 2 montre le réservoir (9), le hublot (10), le liquide (11), et la mousse (12).

La caméra du dispositif est orientée vers le hublot et en fournit l'image représentée par la figure 3. Le traitement de l'image consiste en l'adjonction des éléments représentés dans la figure 4.

La figure 5 représente l'image ainsi obtenue sur le moniteur.

Dans la figure 4 on distingue :

– la position de base (13) servant de référence à la mesure de niveau;

– le cadre de mesure constitué par les éléments (13), (14), (15) et (16) qui délimite la surface de l'image à l'intérieur de laquelle s'effectue l'analyse de l'image;

– la trace de détection (17) du niveau du liquide; cette trace indique l'endroit précis où la détection a lieu, prend ainsi la forme de la surface détectée du liquide et en suit automatiquement l'évolution de position;

– la trace de mesure (18) qui indique l'endroit où est prise en compte la mesure; la longueur de ce segment visualise aussi l'amplitude de la mesure effectuée.

La position respective des quatre éléments constituant le cadre de mesure peut être changée par l'opérateur à partir de la console d'entrée. Cela permet de définir l'emplacement le plus approprié du cadre de mesure.

De même, la position de la trace de mesure (18) peut être placée n'importe où à l'intérieur du cadre de mesure.

La distance entre la position de base (13) et l'élément (15) représente la plage de mesure allant de zéro à cent pour cent.

Le dispositif fournit, par sa console de sortie, un signal analogique et un signal numérique qui correspondent à la longueur relative de la trace de mesure (18), constituant ainsi la mesure en continu du niveau de liquide dans la cuve.

Le choix du type de détection(verticale ou horizontale par rapport à l'image, par seuil de luminosité, par contraste, par filtrages divers) et des seuils de détection sont opérés à partir de la console d'entrée.

La trace de détection (17) et la trace de mesure (18) apparaissent uniquement lorsque la détection est effective. Cette visualisation permet à un opérateur quelconque de jauger la plage de réglage et simplifie à l'extrême le réglage du seuil de détection. De plus, elle constitue une vérification permanente, immédiate et sans ambiguïté de la validité de la mesure.

D'autres dispositifs sont utilisables dans les cas de mesure de niveau par détection optique, notamment les caméras linéaires à base de barrettes à éléments photosensibles. Leur sécurité d'utilisation, du point de vue de la validité de la mesure fournie, dépend de la constance des conditions optiques de mesure. Dans les cas où le seuil optique à detecter peut varier dans de fortes proportions et où les contrastes de l'image sont plus ou moins décelables, la validité de la mesure fournie par ces dispositifs n'apparait pas de manière manifeste et ne peut être confirmée que par des vérifications d'étalonnage plus ou moins fréquentes et laborieuses, selon le cas de figure.

Le dispositif réalisé selon la présente invention simplifie à l'extrême le réglage de détection et offre l'avantage de fournir une vérification visuelle permanente de la validité de la mesure effectuée.

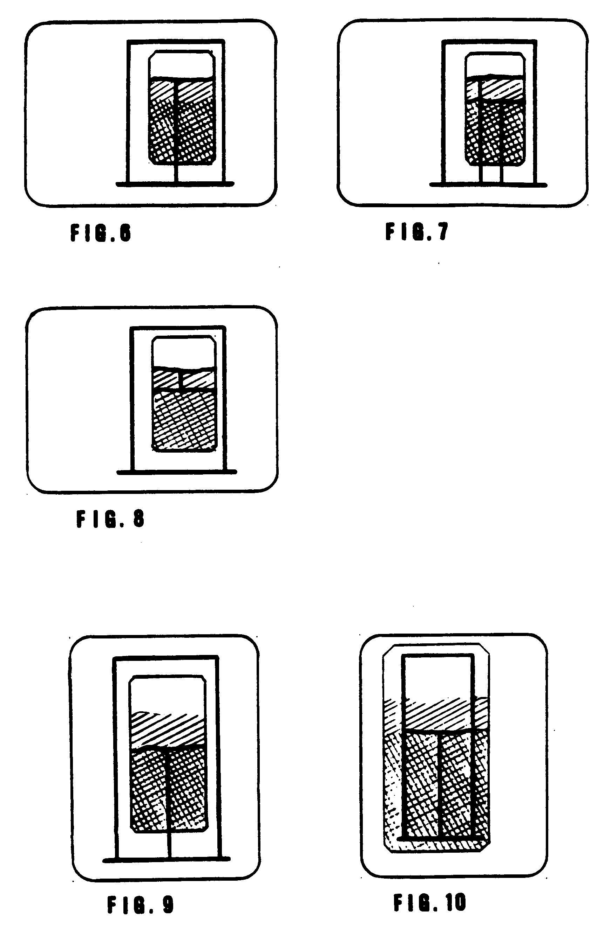

Ce même exemple d'application permet d'illustrer la simplicité d'emploi du dispositif. Par simple choix du mode de détection et du réglage du seuil à partir de la console d'entrée il est possible de mesurer et de visualiser, soit le niveau supérieur de la mousse (figure 6) , soit les deux niveaux en même temps (figure 7), soit uniquement l'épaisseur de la mousse (figure 8). Une représentation verticale de l'image peut être obtenue par une rotation de la caméra de quatre vingt dix degrés et par le choix correspondant du mode de détection. Les figures 9 et 10 illustrent une représentation verticale avec deux dispositions différentes du cadre de mesure.

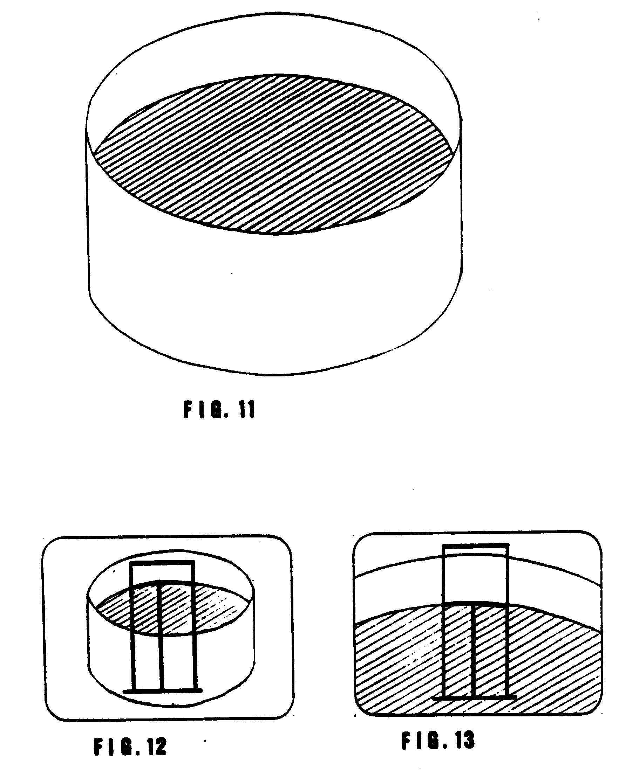

2. Mesure continue de niveau à partir d'une image quelconque où l'on discerne la position du niveau. Un cas de figure tel que celui représenté par la figure 11 peut être traité selon les figures 12 ou 13, en fonction des aspects particuliers liés à l'application.

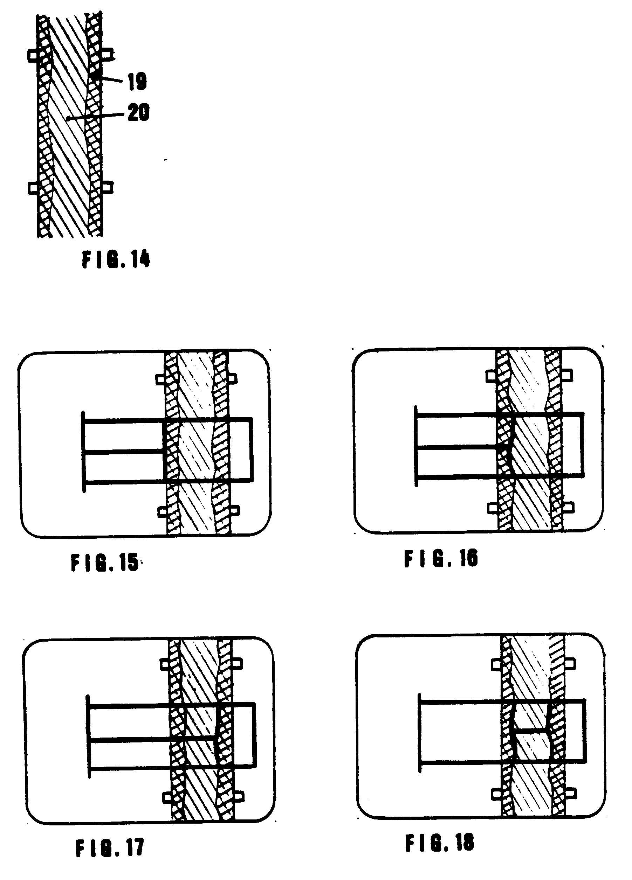

3. Mesure continue de position d'objets ou de matériaux. Exemple d'un convoyeur à bande transporteuse.La figure 14 représente la vue de dessus d'un convoyeur à bande(19) transportant un produit(20) quelconque. Diverses possibilités de mesure sont offertes par le dispositif : mesure de la position de la bande (figure 15), de la position du produit (figures 16 et 17), mesure du remplissage en largeur de la bande (figure 18).

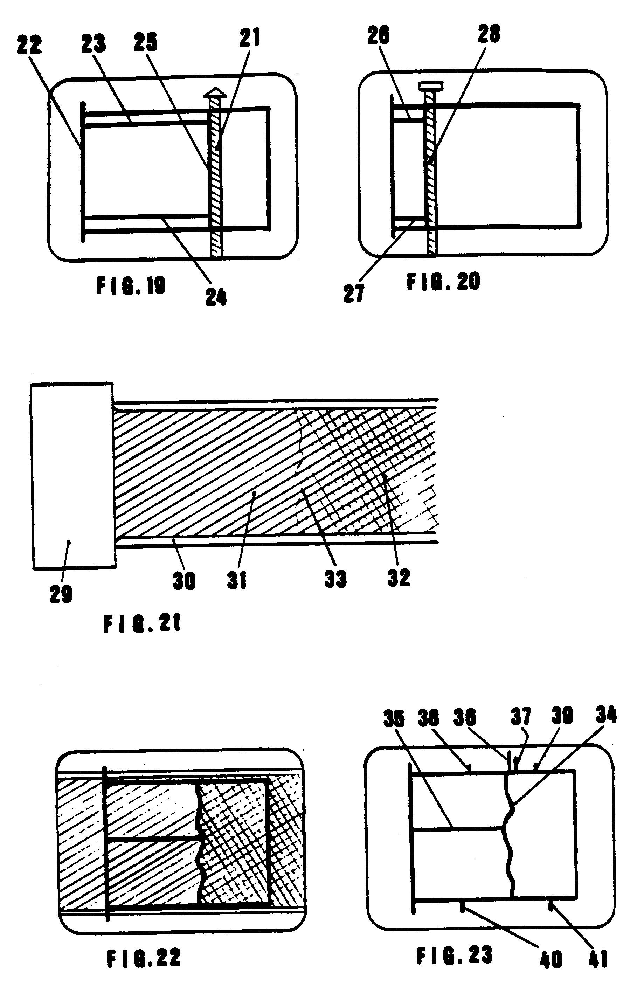

4. Positionnement d'objets par rapport à une ligne de référence. Exemple d'un piquet dont on veut contrôler la verticalité ou en mesurer l'écart. La figure 19 illustre une possibilité parmi d'autres. La verticalité du piquet (21) est vérifiée en comparant les mesures haute (23) et basse (24) qui correspondent à la distance entre la paroi détectée (25) du piquet et la ligne de référence (22). La verticalité de la ligne de référence est établie par le positionnement précis de la caméra par rapport à un objet ou une ligne verticale qui, pour l'étalonnage, sont amenés dans le champ de l'image. L'étalonnage et sa vérification constituent ainsi une opération très simple. La figure 20 illustre la manière de procéder : on vérifie l'égalité de la mesure haute (26) et basse (27) de la distance entre la ligne de référence et, par exemple, un piquet référence (28). L'étalonnage de verticalité de la ligne de référence est conservé lorsque la caméra subit soit des mouvements de translation, soit des mouvements de rotation dans un même plan horizontal.

L'affichage numérique de la mesure présenté par la console de sortie permet une lecture immédiate et automatique des mesures effectuées. L'observation de l'image apparaissant sur l'écran permet une vérification permanente de la validité de la mesure effectuée : présence de la trace de détection de position.

Le dispositif, objet de la présente invention, constituant un moyen fiable de vérifier à distance automatiquement et de manière continue, le positionnement d'un objet par rapport à une référence établie, trouve, dans le génie civil , des applications dans le domaine du positionnement d'éléments de construction et dans le domaine de la vérification permanente de la position d'un objet quelconque : élément de construction, outil, machine, édifice.

Par son principe et ses aspects pratiques, ce dispositif peut remplacer avantageusement , dans divers cas de figure, les systèmes de visée couramment employés. Exemple d'aspect pratique : le moniteur vidéo et la console de sortie sont placés dans la cabine d'un engin de levage, la caméra, fixe, fournit une image du champ d'action critique de l'engin; l'opérateur de l'engin de levage peut, en se basant sur la référence apparaissant dans l'image du moniteur et sur la mesure de distance fournie par l'affichage numérique, positionner correctement un élément de construction sans l'assistance d'une autre personne.

5. Mesure de la position d'une variation d'état d'un processus, perceptible optiquement.

Dans l'industrie papetière, la formation de la feuille sur une machine à papier illustre bien une variation d'état d'un processus perceptible optiquement. La figure 21 représente, en vue de haut, une partie de la table plate d'une machine à papier. La caisse de tête (29) déverse sur la toile (30) un mélange de pâte et d'eau qui est emporté par la toile qui défile une certaine vitesse et sous laquelle des dispositifs de succion aspirent l'eau du mélange. Lorsqu'un certain degré de siccité est atteint, le mélange (31) de pâte et d'eau prend la consistance d'une feuille de papier (32). La transition entre ces deux états est visible plus ou moins nettement à l'oeil nu et l'on peut percevoir la ligne de démarcation (33) qui est appelée "ligne d'eau". La position de la ligne d'eau, la stabilité de sa position et l'amplitude des variations de son profil sont de nature à influencer dans des proportions diverses les paramètres qualitatifs du papier produit.

Le procédé, objet de cette invention, présente, dans ce cas, deux points d'intérêt. Le premier point d'intérêt est constitué, comme dans les exemples d'application déjà cités, par la délivrance d'une mesure de position automatique et continue, sans ambiguité, donc exploitable à des fins de signalisation ou de régulation. Le deuxième point d'intérêt est l'amélioration de la visualisation de la ligne d'eau, ce qui est effectué par le principe même du procédé : visualisation sur l'image vidéo de la position détectée.

La figure 22 montre l'image obtenue par l'utilisation directe du dispositif déjà décrit. En raison de l'importance, dans cette application, de la visualisation du phénomène observé, divers perfectionnements peuvent être apportés au traitement de l'image. La figure 23 montre un exemple d'incrustations rapportées à l'image, particulièrement adapté au cas de la visualisation, de la mesure et du contrôle de la position de la ligne d'eau. On y distingue le cadre de mesure déjà décrit, la trace de détection de la ligne d'eau (34) et la trace de mesure à un endroit choisi (35). La position moyenne de la trace détectée à l'intérieur du cadre de mesure est représentée par la position du segment (36). Le segment (37) représente la consigne de position. Les segments (38) et (39) représentent les positions mini et maxi de la fourchette à l'intérieur de laquelle peut agir la régulation de position. Les segments (40) et (41) représentent des positions mini et maxi de déclenchement d'alarmes.

L'utilisation, facultative, d'un moniteur vidéo couleur permet, par la diversité des couleurs pouvant être attribuées aux divers éléments constituant l'image rapportée illustrée par la figure 23, une visualisation encore plus aisée. L'utilisation d'un moniteur couleur ne nécéssite pas obligatoirement que la caméra soit aussi du type caméra couleur.

Actuellement, il n'existe pas ou très peu d'exemples de dispositifs effectuant une mesure de la position de la ligne d'eau. Les dispositifs classiques envisageables, tels qu'une barrette d'éléments photosensibles placée au-dessus de la plage de mesure ou qu'une caméra linéaire, fournissent des mesures dont la relation avec la position réelle à mesurer n'est pas manifeste. Dans ce cas, une mesure exploitable ne peut être obtenue qu'au prix de vérifications plus ou moins fréquentes et laborieuses de l'étalonnage.

Le dispositif, objet de la présente invention, fournit une mesure exploitable car sa validité apparait en permanence sans ambiguité. Conjointement, en améliorant nettement la visibilité de la formation du processus, caractérisé ici par la ligne d'eau, ce dispositif apporte un avantage appréciable aux responsables de production.

## Revendications

1. Procédé pour détecter et mesurer automatiquement la position de formes ou de nuances, immobiles ou en mouvement, d'une image fournie par une caméra vidéo, employant une caméra vidéo (1), un moniteur vidéo (7), un ensemble électronique (3), une console d'entrée (6) et une console de sortie (8), procédé caractérisé en ce que les éléments mis en oeuvre effectuent, en temps réel, les opérations suivantes :

(a) analyse du signal vidéo fourni par la caméra pour détecter, par un mode de détection et un seuil de détection choisis sélectionnés à la console d'entrée, la position d'une forme quelconque apparaissant dans l'image visée par la caméra, cette détection fournissant, d'une part, un signal qui est utilisé pour élaborer un signal de sortie représentatif de la position mesurée, et, d'autre part, un signal qui est dirigé vers une fonction de traitement d'image dans le but de visualiser sur l'image analysée la position détectée ;

(b) traitement du signal vidéo fourni par la caméra, ce traitement consistant, d'une part, à ajouter sur l'image des segments représentant des lignes verticales et horizontales de longueur et de position choisies sélectionnées à la console d'entrée, ces segments définissant et visualisant le cadre de mesure et la position de référence choisis, et, d'autre part, à ajouter sur l'image la trace de la position détectée apparaissant comme une ligne épousant les contours de la nuance détectée, ainsi qu'un segment de ligne allant de la position de référence à la position détectée, ce segment indiquant l'endroit où est prise en compte la mesure, la position de ce segment étant sélectionnée à la console d'entrée ;

(c) visualisation, sur le moniteur, de l'image composite issue du traitement du signal, sur laquelle figurent simultanément l'image visée par la caméra, le cadre de mesure, la position de référence, la trace de la détection et le segment indiquant l'endroit où s'effectue la mesure ;

(d) élaboration, à partir du signal de détection, d'un signal de mesure calibré représentatif de la distance entre la position détectée et la position de référence, ce signal de mesure, de type analogique ou numérique, étant disponible à la console de sortie et pouvant être visualisé par affichage numérique soit à la console de sortie, soit sur l'écran du moniteur vidéo.

2. Procédé selon la revendication 1., caractérisé en ce que la mesure de position est effectuée à partir d'une image vidéo composée provenant de deux ou plusieurs caméras.

3. Procédé selon l'une quelconque des revendications précédentes, caractérisé en ce qu'il emploie les fonctions d'analyse, de traitement, de visualisation et d'élaboration du signal de mesure permettant de fournir simultanément deux ou plusieurs mesures de position.

4. Dispositif pour la mise en oeuvre du procédé selon les revendications 1 à 3, servant à détecter et mesurer automatiquement la position de formes ou de nuances, immobiles ou en mouvement, d'une image fournie par une caméra vidéo, comportant une caméra vidéo (1), un moniteur vidéo (7), un ensemble électronique (3), une console d'entrée (6) et une console de sortie (8), dispositif caractérisé par le fait qu'il comprend :

(a) des moyens d'analyse en temps réel du signal vidéo (2) fourni par la caméra permettant de détecter la position d'une forme quelconque apparaissant dans l'image visée par la caméra, cette analyse fournissant, d'une part, un signal qui est utilisé pour élaborer un signal de sortie (4) représentatif de la position mesurée, et, d'autre part, un signal qui est utilisé par une fonction de traitement d'image dans le but de visualiser, sur l'image analysée, la position détectée ;

(b) des moyens de traitement en temps réel du signal vidéo fourni par la caméra, ce traitement consistant, d'une part, à ajouter sur l'image des segments représentant des lignes verticales et horizontales de longueur et de position choisies (13,14,15,16), ces segments définissant et visualisant le cadre de mesure et la position de référence choisis, et, d'autre part, ajouter sur l'image la trace de la position détectée (17) apparaissant comme une ligne épousant les contours de la nuance détectée, ainsi qu'un segment de ligne (18) allant de la position de référence à la position détectée, ce segment indiquant l'endroit où est prise en compte la mesure ;

(c) des moyens de visualisation par le moniteur vidéo (7) de l'image composite issue du traitement du signal, sur laquelle figurent, simultanément, l'image visée par la caméra, le cadre de mesure, la position de référence, la trace de la détection et le segment indiquant l'endroit où s'effectue la mesure ;

(d) des moyens pour élaborer, à partir du signal de détection fourni par l'analyse du signal vidéo, un signal de mesure calibré représentatif de la distance entre la position détectée et la position de référence ;

(e) des moyens de sortie du signal de mesure qui fournissent, d'une part, le signal de mesure calibré sous forme analogique ou numérique, d'autre part, un affichage numérique de la mesure soit à la console de sortie, soit sur l'écran du moniteur vidéo ;

(f) des moyens d'accés par la console d'entrée permettant d'effectuer les choix concernant : les fonctions, les paramètres et le seuil de détection qui opèrent l'analyse du signal vidéo, les paramètres définissant le traitement de l'image par la position du cadre de mesure et de la ligne de référence, la position où est effectuée la mesure par la position visualisée par le segment représentatif allant de la ligne de référence à la trace de détection, et, dans le cas d'un moniteur couleur, la couleur des divers éléments rajoutés par le traitement d'image.

5. Dispositif selon la revendication 4, caractérisé en ce qu'il comporte les moyens permettant la mesure et la visualisation simultanées de plus d'une position sur la même image.

6. Dispositif selon l'une quelconque des revendications 4 ou 5, caractérisé en ce qu'il comporte une caméra noir et blanc avec un moniteur couleur ou vice versa.

7. Dispositif selon l'une quelconque des revendications 4 à 6, caractérisé en ce qu'il comporte deux ou plusieurs caméras ainsi que les moyens d'analyse et de traitement permettant de prendre en compte séparément ou simultanément les signaux vidéo des images fournies par ces caméras.

8. Dispositif selon l'une quelconque des revendications 4 à 7, caractérisé en ce qu'il comporte les moyens permettant de fournir la mesure et de visualiser la valeur de la position moyenne de la trace détectée à l'intérieur du cadre de mesure.

## Patentansprüche

1. Methode zur automatischen Detektion und Messung der Position von Formen oder Nuancen, beweglich oder in Bewegung, deren Bilder unter Benutzung einer Videokamera (1), ein Videomonitor (7), ein electronisches Steuergerät (3), eine Eingabeeinheit (6) und eine Ausgabeeinheit (8) geliefert werden, Methode dadurch gekennzeichnet, daß die folgenden Arbeitsvorgänge unter Benutzung der verwendeten Elemente, und zwar in Echtzeit, ausgeführt werden:

(a) Analyse des Videosignales, das von der Kamera geliefert wird, zur Detektion des Position einer willkürlichen Form, die als von der Kamera aufgenomenes Bild erscheint. Diese Detektion wird durch eine Detektionsart und eine gewählte Detektionsschwelle (Wahl mittels Eingabeeinheit) vorgenommen. Weiterhin liefert diese Detektion einerseitz ein Signal, das zur Herstellung eines Ausgangssignals dient, Welches die gemessene Position darstellt, und andererseits ein Signal, das zu der Funktion der Bildverarbeitung geleitet wird mit dem Ziel auf dem analysierten Bild die festgestellte Position darzustellen;

(b) Verarbeitung des Videosignals, das von des Kamera geliefert Wird. Die Verarbeitung besteht einerseits darin, dem Bild, Bildsegmente hinzuzufügen, die durch vertikale und horizontale Linien dargestellt werden, und deren Länge und Position wählbar ist (Wahl mittels Eingabeeinheit). Diese Segmente dienen der Definition und der Darstellung des Meßrahmens und der gewählten Referenzposition. Andererseits besteht die Verarbeitung darin, daß dem Bild ein Zeichen zugefügt wird, das die festgestellte Position darstellt (es erscheint in der Form einer Linie, die sich an die Konturen der festgestellten Nuance anschmiegt), auf gleiche Weise wie ein Segment einer Linie, welches von der Referenzposition bis zu der festgestellten Position reicht. Dieses Segment bezeichnet den Ort, von dem die Messung ausgeht, und die Position des Segmentes, die Mittels der Eingabeeinheit gewählt wurde;

(c) Bilddarstellung auf einem Monitor des zusammengesetzten Bildes, das von der Verarbeitung des Signals geliefert wird. Das Bild stellt gleichzeitig das von der Kamera aufgenomene Bild, den Meßrahmen, die Referenzposition, das Detektionszeichen und das Segment dar, das den Ort bezeichnet, an dem die Messung ausgefürt wird;

(d) Ausgehend von dem Detektionssignal wird die Verarbeitung eines Kalibrierten Meßsignals vorgenommen, das die Entfernung zwischen der festgestellten Position und der Referenzposition darstellt. Dieses analoge oder digitale Meßsignal steht der Ausgabeeinheit zur Verfügung und kann auf einer digitalen Anzeige entwerder auf der Ausgabeeinheit oder auf dem Bildschirm des Videomonitors dargestellt werden.

2. Methode nach Anspruch 1., gekennenzeichnet durch eine Positionsmessung ausgeführt ausgehend von einem zusammengesetzten Videobild, das von zwei oder mehreren Kameras stammt.

3. Methode nach Ansprüchen 1. oder 2., gekennenzeichnet durch die Verwendung von Funktionen der Analyse, der Verarbeitung, der Bilddarstellung und der Erarbeitung eines Meßsignales, das eine gleichzeitige Lieferung zweier oder mehrerer Positionsmessugen erlaubt.

4. Einrichtung zur Verwirklichung der Methode nach Ansprücen 1. bis 3., die dazu dient, eine automatische Detektion und Messung durchzuführen von einer Position von Formen oder Nuancen, unbeweglich oder in Bewegung, eines Bildes, das von einer Videokamera geliefert wird, dieses wird ermöglicht durch eine Videokamera (1), einen Videomonitor (7), ein elektronisches Steuergerät (3), eine Eingabeeinheit (6) und eine Ausgabeeinheit (8), dadurch gekennzeichnet, daß sie das Folgende beinhaltet:

(a) die Mittel zu einer Echtzeitanalyse des Videosignales (2), das von der Kamera geliefert wird, das die Detektion der Position einer beliebigen Form erlaubt, die in dem von der Kamera erfaßten Bild erscheint. Diese Analyse liefert einerseits ein Signal, das zur Erstellung eines Ausgangssignales (4) benutzt wird, welches die gemessene Position darstellt, und andererseits ein Signal, das durch eine Funktion der Bildverarbeitung mit dem Ziel benutzt wird, die festegestellte Position auf dem Analysebild sichtbar zu machen;

(b) die Mittel zur Echtzeitverarbeitung des Videosignales, das von der Kamera geliefert wird. Die Verarbeitung besteht einerseits darin, dem Bild Segmente hinzuzufügen, die durch vertikale und horizontale Linien mit gewählter Länge und Position (13,14,15,16) dargestellt sind. Diese Segmente definieren und stellen den Meßrahmen und die gewählte Referenzposition dar. Andererseits besteht die Verarbeitung darin, daß dem Bild ein Zeichen für die festgestellte Position (17) zugefügt wird (es erscheint wie eine Linie, die sich an die Konturen der festgestellten Nuance anschmiegt), auf gleiche Weise wie ein Segment einer Linie, die von der Referenzposition bis zu der festgestellten Position reicht. Dieses Segment bezeichnet den Ort, von dem die Messung ausgeht;

(c) die Mittel zur Bilddarstellung durch eine Videomonitor (7) von dem zusammengesetzten Bild, das von der Verarbeitung des Signales stammt. Auf diesem Bild werden gleichzeitig das von der Kamera erfaßte Bild, der Meßrahmen, die Referenzposition, das Zeichen der Detektion und das Segment das den Ort bezeichnet, an dem die Messung ausgefürt wird, dargestellt;

(d) die Mittel zur Verarbeitung eines kalibrierten Meßsignales ausgehend von dem Signal der Detektion, das von der Analyse des Videosignales geliefert wird. Dieses Meßsignal stellt die Entferung dar zwischen der festgestellten Position und der Referenzposition;

(e) die Mittel zur Ausgabe des Meßsignales, die einerseits das kalibrierte Meßsignal auf analoge oder auf digitale Weise liefern, und die andererseits eine digitale Anzeige des Messung liefern entweder an der Ausgabeeinheit oder auf dem Bildschirm des Videomonitors;

(f) die Mittel zum Zugang durch die Eingabeeinheit, die die Ausführung der folgenden Wahlvorgänge erlauben: die Funktionen, die Parameter und die Detektionsschwelle die die Analyse des Videosignales bewirken, die Parameter die die Verarbeitung des Bildes durch die Position des Meßrahmens und die Referenzlinie definieren; die Position ist diejenige, an der die Messung ausgeführt wird, und dieses durch die abgebildete Position, die durch das Segment dargestellt wird, das von der Referenzlinite bis zu dem Zeichen der Detektion reicht; schließlich, im Falle eines Farbmonitors, die Farbe der verschiedenen Elemente, die durch die Bildverarbeitung hinzugefügt wird.

5. Einrichtung nach Anspruch 4., dadurch gekennzeichnet, daß sie die Mittel beinhaltet, die die Messung, die gleichzeitige Bilddarstellung und eine Position auf demselben Bild ermöglicht.

6. Einrichtung nach Ansprüchen 4. oder 5., dadurch gekennzeichnet, daß sie eine Schwartz-Weiß-Kamera mit einem Farb-Monitor, oder umgekehrt, beinhaltet.

7. Einrichtung nach Ansprüchen 4. bis 6., dadurch gekennzeichnet, daß sie zwei oder mehrere Kameras, und daß sie die Mittel der Analyse und der Verarbeitung, die es erlauben, die von diesen Videokameras gelieferten Video-Signale getrennt oder gleichzeitig in Betracht zu ziehen, beinhaltet.

8. Einrichtung nach Ansprüchen 4. bis 7., dadurch gekennzeichnet, daß sie die Mittel beinhaltet, die es erlauben, die Messung zu liefern und den Wert der mittleren Position des festgestellten Zeichens innerhalb des Meßrahmens bildlich darzustellen.

## Claims

1. A method for automatically detecting and measuring the position of the forms or nuances, motionless or in motion, of an image produced by a video camera, using a video camera (1), a video monitor (7), an electronic device (3), an input console (6) and an output console (8), method characterized in that the elements that are used accomplish in real time the following operations:

(a) camera video signal analysis in order to detect, by chosen detection mode and threshold detection selected at the input console, the position of any form appearing on the image produced by the camera, this detection producing: a signal that is used to elaborate an ouput signal that represents the measured position, and, a signal directed to an image processing function in order to visualize on the analyzed image, the detected position;

(b) camera video signal processing consisting in: adding to the image segments representing vertical and horizontal lines that have chosen lenght and position and that are selected at the input console, these segments defining and visualizing the chosen measurement field and the reference position, adding on the image the track of the detected position that appears as a line that follows the detected nuance and also a line segment going from the reference position to the detected position, this segment indicating the position where the measurement is made, the position of this segment being selected at the input console:

(c) visualization, on the monitor, of the composite image issued from the signal processing, in which are represented simultaneously the camera image, the measurement field, the reference position, the detection trace and the segment indicating where the measurement is made;

(d) elaboration, from the detection signal, of a calibrated measurement signal that represents the distance between the detected position and the reference position, this analogical or numerical signal being available at the output console with the possibility to be visualized by numerical display at the output console or on the video monitor screen.

2. A method, as claimed in claim 1, characterized in that the position measurement is done from a compound video image produced by two or more cameras.

3. A method as claimed in any of the preceding claims, characterized in that it employs the analysis, the processing, the visualization and the elaboration functions applied to the measurement signal that permit to give simultaneuosly two or smore position measurements.

4. A device to make use of the method as claimed in any of claims 1 to 3, used for automatically detecting and measuring the position of the forms or nuances, motionless or in motion, of an image produced by a video camera, using a video camera (1), a video monitor (7), an electronic device (3), an input console (6) and an output console (8), device characterized in that it comprises:

(a) the means to analyse in real time the camera video signal (2), used to detect the position of any form appearing on the image produced by the camera, this detection giving a signal that is used to elaborate an output signal (4) that represents the measured position, and giving also a signal directed to an image processing function in order to visualize, on the analyzed image, the detected position:

(b) the means to process in real time the camera video signal, this processing consisting in: adding to the image segments representing vertical and horizontal lines that have chosen lenght and position (13,14,15,16), these segments defining and visualizing the chosen measurement field and reference position, adding on the image the track of the detected position (17) that appears as a line that follows the detected nuance and also a line segment (18) going from the reference position to the detected position, this segment indicating the position where the measurement is made;

(c) the means to visualize by the video monitor (7) the composite image issued from the signal processing, in which are represented, simultaneously, the camera image, the measurement field, the reference position, the detection trace and the segment indicating where the measurement is made;

(d) the means to elaborate, from the detection signal, a calibrated measurememt signal that represents the distance between the detected position and the reference position;

(e) the means to output the measurement signal that supply the analogical or numerical calibrated measurement signal, and that supply also a numerical display from the measurement at the output console or on the video monitor screen;

(f) the means to have access, by the input console, to different choices concerning: the functions, the detection parameters and threshold that analyse the video signal, the parameters that define the image processing ( measurement field and line reference positions), the position where the measurement is made ( the position visualized by the representative segment going from the reference line to the detection track) and, in case of a colour monitor, the colour of the different elements added by the image processing.

5. A device as claimed in claim 4, characterized in that it includes the means that permit to measure and to visualize simultaneously more than one position on the same image.

6. A device as claimed in any of claims 4 or 5, characterized in that it includes a black and white camera with a colour monitor or vice versa.

7. A device as claimed in any of claims 4 to 6, characterized in that it includes two or more cameras together with the analysis and processing means that permit to take into account separately or simultaneously the video signals issued from these cameras.

8. A device as claimed in any of claims 4 to 7, characterized in that it includes the means that permit to supply the measurement and to visualize the value of the mean position of the detected track within the field measurement.

FIG. 1.A

FIG. 1.B

F I G . 1.C

FIG. 2

FIG. 3

FIG. 4

FIG. 5

FIG.6

FIG.7

FIG. 8

FIG. 9

FIG. 10

FIG. 11

FIG. 12

FIG. 13

FIG. 14

FIG. 15

FIG. 16

FIG. 17

FIG. 18

FIG.19

FIG.20

FIG.21

FIG.22

FIG.23